# EUROPEAN PATENT SPECIFICATION

(11) **EP 1 150 869 B1**
(45) Date of publication and mention of the grant of the patent: **08.10.2003**
(21) Application number: 00905465.1
(22) Date of filing: 16.02.2000
(51) Int. Cl.: B60R 21/26

(54) **CONTROLLABLE GAS GENERATOR**
STEUERBARER GASGENERATOR
GENERATEUR DE GAZ REGULABLE

(30) Priority: 17.02.1999 NL 1011318
(43) Date of publication of application: 07.11.2001
(73) Proprietor: Nederlandse Organisatie voor Toegepast-Natuurwetenschappelijk Onderzoek TNO, 2628 VK Delft (NL)
(72) Inventor: VAN DEN BERG, Ronald, Peter, NL-2548 AK The Hague (NL)
(74) Representative: Prins, Adrianus Willem
(86) International application number: NL0000095
(87) International publication number: WO00051852

(56) References cited:
- DE-A- 19 725 418
- US-A- 3 713 667
- US-A- 3 930 666
- US-A- 4 018 457

## Description

This invention relates to a controllable gas generator, for instance for an airbag. This invention also relates to a method for controlling the amount of gas generated by a gas generator according to claims 1 to 9.

A controllable gas generator according to the preamble of claim 1 is known from the document US 3,930,666.

An airbag system generally comprises at least a diagnostic module and an airbag module. The airbag module consists of an inflatable bag and a gas generator or inflator. The gas generator consists of means providing for the release of a gas (main charge). This gas-forming substance can be stored in the gas generator both in solid form and in gaseous or liquid form (for instance compressed gas).

A collision is sensed by crash sensors which give a signal to the diagnostic module. The diagnostic module assesses on the basis of an integrated algorithm whether the airbag should go off. In general, the diagnostic module is set such that the airbag is activated upon collisions with speeds exceeding 16-19 km/h. If this is the case, the module sends an electrical signal to the means providing for the release of the gas to the inflatable bag.

In the case of propellant charges, this can be an ignition mechanism, while in the case of compressed gases, a control valve or a breaking plate or other means that can provide for the release of the gas can be used. The ignition thereupon ignites the main charge of the inflator, or, in the case of compressed gases as main charge, by opening the valve or the breaking plate an orifice is cleared which passes the gas to the inflatable bag. The released gases of the ignited main charge then inflate the airbag. The airbag thereupon dampens the movement the body makes as a result of the collision. Directly following this, the airbag deflates again through the presence of blow-out holes or through the porosity of the fabric of the airbag. The extent to which the airbag is inflated thus depends on the net mass flow of the gas. The net mass flow is defined by the amount of gas flowing in per unit time less the amount of gas flowing out per unit time.

In view of the effects that collisions at high speed can have on the human body, and the rate at which this occurs, it is requisite that an airbag can be rapidly inflated. For the mechanisms providing for the inflation of the airbag, this means that they must have a short response time. It is also requisite that the inflation and filling of the airbag can take place in a very short time. These times are generally of the order of milliseconds. A typical time for an airbag to be inflated to its full size is about 5-80 milliseconds.

The effect of a collision on a body is a function of a large number of variables, such as the speed of collision, the manner of colliding, collision into a hard or a soft object, and body-dependent variables such as position, height and weight. Naturally, the presence of a body is also relevant for whether or not the airbag is inflated. This results in a large variety of conditions in a collision. To make better provision for this variety of collision conditions, it is desirable to control the amount of damping of the airbag and hence the rate at which the cushion is inflated. The control of the mass flow of an airbag is subject to equally stringent requirements as is the above-described airbag inflation. For the mechanisms controlling the mass flow, this means that the response time of such systems must be of the same order of magnitude as that of the airbag described above, that is, of the order of milliseconds, while further the total time needed for inflating the airbag may not be subject to any essential modification. To that end, measures have previously been proposed such as described, for instance, in US 5690357.

Also known are measures utilizing an airbag containing two pyrotechnic charges of different capacity which can be separately ignited. Through the variation in ignition possibilities (small capacity, large capacity or both), it is then possible to obtain three increasingly stronger impact-decelerating effects of an airbag. At the instant of collision, the desired impact deceleration is determined and thereupon it is determined which combinations are ignited.

A disadvantage of the above-mentioned measure is that it allows only limited control of the impact-decelerating effect. Moreover, the determination of the desired impact-decelerating effect in the prior art is basically a static control. A static control means that at the moment of impact the desired impact-decelerating power is determined a single time and then the airbag is inflated.

It is not uncommon that during the collision changes occur in the conditions and hence in the variables. There are ongoing developments towards fitting the diagnostic module with a dynamic control. This means that at any time during the collision the variables can be determined and can be processed by the diagnostic module. It would then be desirable if the impact deceleration of the airbag could be adjusted to these changing conditions.

Another disadvantage of the above-described measures is therefore that after the ignition of the pyrotechnic charges referred to it is not possible to adjust the impact-decelerating effect of the airbag during the collision.

It is therefore an object of the invention to come to a better controllable impact deceleration of an airbag.

A controllable gas flow, as such, can also be achieved by providing several closing means on the holder of a gas generator. These closing means can be selectively removed by means of a propellant charge. By selectively removing these closing means, the outflow area can be enlarged.

A propellant charge for removing the closing means is understood to mean a propellant. This propellant is a substance or a mixture of substances from which energy is obtained through oxidation or decomposition or a combination thereof, while the energy is not obtained through a decomposition of the substance as a result of a shock wave.

It is another object of the invention to provide an airbag which can be controlled at more times, and also otherwise to overcome disadvantages in the prior art and to achieve a gas flow from the gas generator which is better controllable and controllable at more times.

From the viewpoint of response time, it is desirable to utilize pyrotechnic systems such as propellant charges for removing the closing means.

It is a further object of the invention to provide a controllable gas generator which, while maintaining a short response time, has the possibility of realizing both an increase and a reduction of the generated mass flow.

The invention is based on the insight that gas generating systems based on solid propellants and on compressed gases react differently with regard to the enlargement of the outflow area, for instance by opening additional outflow orifices.

The fact is that upon lowering the pressure above an ignited solid propellant by enlarging the outflow area, in most cases a deceleration of the combustion occurs and hence a reduction of the amount of gas being released per unit time, whereas enlargement of the area in case of a compressed gas leads to an increase of the amount of gas being released per unit time. Through appropriate application of a combination of these effects, it can be provided that during the generation of gas the amount is both increased and reduced.

This object is solved by a gas generator according to the features of claim 1.

Accordingly, the invention is characterized by a controllable gas generator based on a combination of a first gas generating system with compressed gas and a second gas generating system with a solid material generating gas upon combustion, while the amounts of gas which the two systems generate are controllable independently of each other.

The invention also relates to a controllable gas generator based on a combination of a first gas generating system with compressed gas and a second gas generating system with a solid material generating gas upon combustion, while the amounts of gas the two systems generate are dependent on each other.

Through this combination of two systems, it is possible to vary the amounts of gas generated with very short response times. For instance, through regulation with the compressed gas system, the amount of gas can be increased, while with the solid system the amount of gas can be reduced. It is also rendered possible, by increasing the amount of gas from the first system, to influence the amount of gas generated by the second system.

In practice, when starting the gas generator for inflating the airbag, generally the activation of both systems will be opted for. The extent to which that happens depends on the external factors, which have been determined with the aid of the diagnostic module. During inflation of the airbag, the diagnostic module monitors continuously or intermittently what the situation is like and, if necessary, makes adjustments. By increasing the number of orifices (outflow area) of either the first or the second system, the rate of inflation and extent of inflation, respectively, can be increased or reduced.

It is possible to have the two systems function dependently upon or independently of each other. Thus, three coordinate embodiments are created. In the first embodiment, the second gas generating system, based on a solid propellant, is placed in the holder of the first gas generating system, based on a compressed gas. The mass flow from the first gas generating system is now co-determined by the control of the mass flow of the second gas generating system.

In the other embodiment, the first and the second gas generating system are arranged next to each other. The mass flow from the first gas generating system can now be controlled independently of the second gas generating system.

A third embodiment is that in which the first gas generating system is arranged in the holder of the second gas generating system. As with the first embodiment, the controls of the two systems are mutually dependent.

A possibility for the third embodiment is to use the solid propellant in the form of a porous or gas-permeable material. When the first gas generating system is activated, this gas flows through or along the gas generating substance of the second gas generating system. The pressure change resulting therefrom influences the total mass flow of the generator.

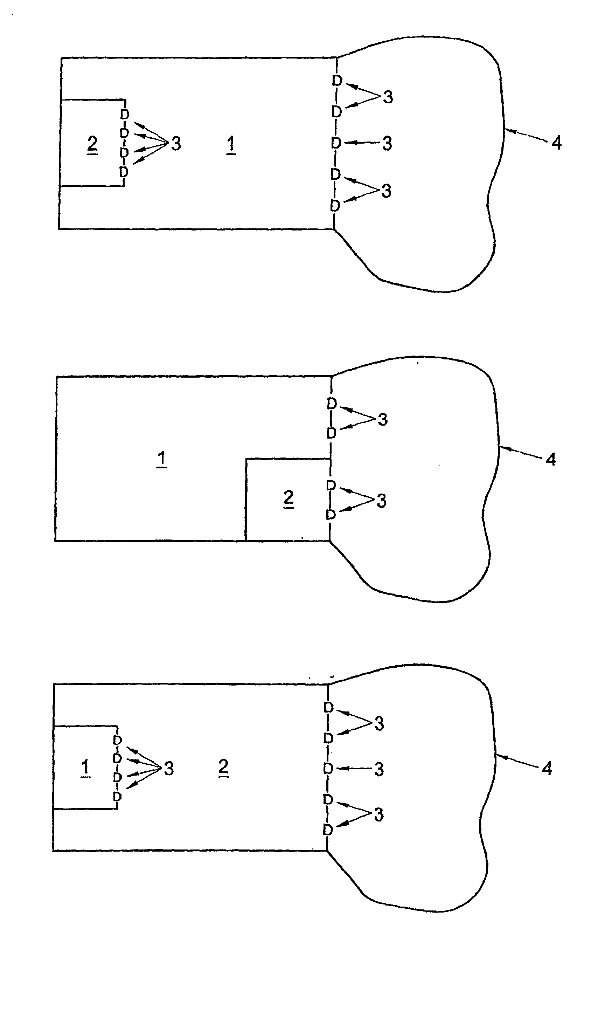

The three distinct embodiments are schematically shown in Fig. 1.

A preferred embodiment concerns systems in which one or both gas generating systems are provided with more orifices, which are all provided with closing means.

In order to create a greater variety of mass flow control possibilities, a preferred embodiment is possible in which the orifices in the gas generating systems are of mutually different diameter or groups of different diameter and naturally the closing means have been adapted accordingly.

In a collision, the desired impact-decelerating effect is determined by the control mechanism in the diagnostic module of the airbag. The control mechanism of the airbag comprises a measuring and calculating system which, depending on a number of factors, drives the control of the airbag. The measuring system comprises a number of sensors or other means for collecting information about external factors that are of importance for the functioning of the airbag. Examples of such factors are speed of the vehicle, presence, position, height and weight of the body, deceleration during the collision, and the like. This information is then processed in a calculating system. From the calculating system, the drive of the gas generator is controlled for achieving the desired mass flow.

In order to achieve the desired impact-decelerating effect, in an embodiment of the invention the closing means in the gas generating system is removed and a mass flow generated.

Accordingly, the invention also relates to a method in which through continuous determination of the external factors it is established whether the mass flow which is generated needs to be adjusted, and, if necessary, the amount of gas is adjusted.

In the use of solid propellants, generally one closed orifice for the generated gas is already present in the holder. This closed orifice, however, is not closed by a closing means that is removed with a propellant charge as described hereinbefore. As closing means for this orifice, for instance to exclude weather influences and moisture, a weather seal or a breaking plate is fitted. Accordingly, the invention also relates to the presence of several additional closed orifices which, if necessary, can be opened in the manner indicated elsewhere in this description.

In the use of gaseous propellants, such an orifice for the generated gas is, of course, by principle absent in the holder. Accordingly, the invention also relates to the presence of several closed orifices which can be opened according to need.

The first system of the controllable gas generator is based on a compressed or liquid gas, while the second system is based on a solid propellant.

In a preferred embodiment, the first system is filled with a compressed gas. Through removal of the closing means, a certain flow of gas is released; through the removal of more closing means the mass flow increases and the airbag is inflated more rapidly. The impact-decelerating effect of the airbag thus increases. The second system is based on a solid propellant charge. The rate of combustion of propellant charge is dependent on the pressure during the combustion. In some propellant charges, a high pressure results in a rapid combustion while a lower pressure provides for a slower combustion. As a consequence, the amount of gas generated per unit time is dependent on the pressure in the system in which the igniting propellant charge is contained. By opening more orifices in the holder, the pressure in the holder is reduced and hence the rate of combustion of the propellant charge will decrease. As a result, less gas is generated per unit time, the mass flow decreases and the airbag will be inflated less rapidly. Thus, the impact-decelerating effect of the airbag is reduced.

In an embodiment in which the first and the second gas generating systems are arranged in mutual dependence, a reduction of the rate of combustion of the propellant charge in the holder of the second system can also be achieved by removing closing means of the first system.

There are also propellant charges known which have opposite properties, that is, exhibit negative pressure dependence. Upon opening of more orifices and the attendant pressure decrease, these propellant charges will combust faster, so that the airbag is inflated faster. These propellant charges, too, find application in the second gas generating system and can be employed for influencing the mass flow.

It will be clear that through a proper combination of the removal of the closing means of two separate gas generating systems, not only the mass flow and hence the inflation of the airbag can be controlled better, but also the generation of the mass flow can be accelerated or decelerated in a later stage. It will also be clear that this can be done in several ways through arrangement of the different systems relative to each other (in mutual dependence or independence) and also that the use of solid propellants with a positive or negative pressure dependence can further influence the mass flow.

## Claims

1. A controllable gas generator based on a combination of a first gas generating system (1) with compressed gas and a second gas generating system (2) with a solid material which generates gas upon combustion, each of said systems having outflow means comprising outflow areas closed with closing means, **characterized in that** each of the outflow means is closed with several closing means, wherein during generation of the gas the outflow areas of each of said outflow means are controllable independently of each other by selectively removing said closing means (3) to enlarge the said outflow area.

2. A controllable gas generator according to claim 1, wherein the outflow areas of said outflow means are controllable by means of a measuring and calculating system.

3. A controllable gas generator according to claim 1 or 2, wherein the mass flow during gas generation is increasable by enlarging the outflow area of the first gas generating system (1) and reducible by enlarging the outflow area of the second gas generating system (2).

4. A controllable gas generator according to any of the preceding claims, comprising at least one holder with compressed gas provided with a controllable outflow area as first gas generating system (1), and at least one holder with solid propellant provided with a controllable outflow area as second gas generating system (2).

5. A controllable gas generator according to any of the preceding claims,, wherein in at least one of said gas generating systems (1,2) two or more orifices are present, which are provided with removable closing means (3).

6. A gas generator according to claim 5, wherein the orifices in the holder are of mutually different diameter or groups of different diameters.

7. A controllable gas generator according to any of the preceding claims,, wherein the orifice in the holder is opened by removing the closing means (3).

8. A controllable gas generator according to any of the preceding claims,, wherein said control is driven on the basis of the desired mass flow.

9. A controllable gas generator according to any of the preceding claims,, wherein the first and the second gas generating system (1,2) are contained one within the other in a manner such that the control of the mass flow of one system is influenced by the mass flow of the other system.

10. A method for controlling the amount of gas which is generated by a gas generator according to any of the claims 1-9, wherein the desired mass flow is set with the aid of a measuring and calculating system depending on external factors, and subsequently by controlling the separate mass flows coming from said first and second gas generating systems (1,2), the desired initial mass flow is set and, if desired, adjusted during the generation.

11. A method according to claim 10, wherein through the continuous determination of the external factors, it is established whether the mass flow which is generated is to be adjusted and, if necessary, the amount of gas is adjusted.

12. A method according to claim 10 or 11, wherein the generated mass flow is increased by increasing the outflow area of the first gas generating system (1).

13. A method according to any of the claims 8-12, wherein the generated mass flow is reduced or increased by enlarging the outflow area of the second gas generating system (2).

14. An airbag comprising a gas generator according to any of the claims 1-9, and an inflatable bag (4) connected with the gas generator.

## Patentansprüche

1. Steuerbarer Gasgenerator auf Basis einer Kombination eines ersten Gasgeneratorsystems (1) mit komprimiertem Gas und einem zweiten Gasgeneratorsystem (2) mit einem festen Material, das bei Verbrennung Gas erzeugt, wobei jedes der Systeme Ausflussmittel hat, die mit Verschlussmitteln verschlossene Ausflussflächen aufweisen, **dadurch gekennzeichnet, dass** jedes der Ausflussmittel mit mehreren Verschlussmitteln verschlossen ist, wobei während der Erzeugung des Gases die Ausflussflächen von jedem Ausflussmittel unabhängig voneinander steuerbar sind, indem selektiv Verschlussmittel (3) entfernt werden, um die Ausflussfläche zu vergrößern.

2. Steuerbarer Gasgenerator nach Anspruch 1, wobei die Ausflussflächen der Ausflussmittel mittels eines Mess- und Berechnungssystems steuerbar sind.

3. Steuerbarer Gasgenerator nach Anspruch 1 oder 2, wobei der Massenstrom während der Gaserzeugung zu erhöhen ist, indem die Ausflussfläche des ersten Gasgeneratorsystems vergrößert wird, und zu reduzieren ist, indem die Ausflussfläche des zweiten Gasgeneratorsystems (2) vergrößert wird.

4. Steuerbarer Gasgenerator nach einem der vorhergehenden Ansprüche, der wenigstens einen Behälter mit komprimiertem Gas, der mit einer steuerbaren Ausflussfläche versehen ist, als erstes Gasgeneratorsystem (1) und wenigstens einen Behälter mit einer steuerbaren Ausflussfläche als zweites Gasgeneratorsystem (2) aufweist, der mit einer steuerbaren Ausflussfläche versehen ist.

5. Steuerbarer Gasgenerator nach einem der vorhergehenden Ansprüche, wobei in wenigstens einem der Gasgeneratorsysteme (1, 2) zwei oder mehr Öffnungen vorhanden sind, die mit entfernbaren Verschlussmitteln (3) versehen sind.

6. Steuerbarer Gasgenerator nach Anspruch 5, wobei die Öffnungen in dem Behälter voneinander unterschiedliche Durchmesser haben oder Gruppen von unterschiedlichen Durchmessern.

7. Steuerbarer Gasgenerator nach einem der vorhergehenden Ansprüche, wobei die Öffnung in dem Behälter geöffnet wird, indem das Verschlussmittel (3) entfernt wird.

8. Steuerbarer Gasgenerator nach einem der vorhergehenden Ansprüche, wobei die Steuerung auf Grundlage des gewünschten Massenstroms betrieben wird.

9. Steuerbarer Gasgenerator nach einem der vorhergehenden Ansprüche, wobei das erste und das zweite Gasgeneratorsystem (1, 2) eines in dem anderen in einer Weise enthalten ist, so dass die Steuerung des Massenstroms eines Systems durch den Massenstrom des anderen Systems beeinflusst wird.

10. Verfahren zur Steuerung der Gasmenge, die von einem Gasgenerator nach einem der Ansprüche 1 bis 9 erzeugt wird, wobei der gewünschte Massenstrom mit Hilfe eines Mess- und Berechnungssystems in Abhängigkeit von externen Faktoren festgesetzt wird und danach die separaten Massenströme, die von dem ersten und dem zweiten Gasgeneratorsystemen (1, 2) fließen, gesteuert werden, wobei der gewünschte anfängliche Massenstrom festgesetzt wird und, wenn erwünscht, während der Gaserzeugung angepasst wird.

11. Verfahren nach Anspruch 10, wobei durch die kontinuierliche Bestimmung der externen Faktoren festgestellt wird, ob der Massenstrom, der erzeugt wird, angepasst werden soll, und, wenn erforderlich, die Gasmenge angepasst wird.

12. Verfahren nach Anspruch 11 oder 12, wobei der erzeugte Massenstrom erhöht wird, indem die Ausflussfläche des ersten Gasgeneratorsystems vergrößert wird.

13. Verfahren nach einem der Ansprüche 8 bis 12, wobei der erzeugte Massenstrom reduziert oder erhöht wird, indem die Ausflussfläche des zweiten Gasgeneratorsystems (2) vergrößert wird.

14. Airbag mit einem Gasgenerator nach einem der Ansprüche 1 bis 9 und einem aufblasbaren Beutel (4), der mit dem Gasgenerator verbunden ist.

## Revendications

1. Générateur de gaz réglable basé sur la combinaison d'un premier système générateur de gaz (1) avec gaz comprimé et un second système générateur de gaz (2) avec un matériau solide qui génère du gaz à la combustion, chacun des dits systèmes ayant des moyens d'échappement consistant en des zones d'échappement fermées par des moyens de fermeture, **caractérisé en ce que** chacun des moyens d'échappement est fermé par plusieurs moyens de fermeture, les zones d'échappement de chacun des dits moyens d'échappement pouvant chacune être réglées indépendamment des autres pendent la production du gaz en retirant de manière sélective lesdits moyens de fermeture (3) afin d'agrandir ladite zone d'échappement.

2. Générateur de gaz réglable selon la revendication 1, dans lequel les zones d'échappement des dits moyens d'échappement peuvent être réglées au moyen d'un système de mesure et de calcul.

3. Générateur de gaz réglable selon la revendication 1 ou la revendication 2, dans lequel le débit massique durant la production de gaz peut être augmenté en agrandissant la zone d'échappement du premier système générateur de gaz (1) et peut être réduit en agrandissant la zone d'échappement du second système générateur de gaz (2).

4. Générateur de gaz réglable selon l'une quelconque des revendications précédentes, comprenant, comme premier système générateur de gaz (1), au moins un récipient à gaz comprimé doté d'une zone d'échappement réglable et, comme second système générateur de gaz (2), au moins un récipient à propulseur solide doté d'une zone d'échappement réglable.

5. Générateur de gaz réglable selon l'une quelconque des revendications précédentes, dans lequel il est prévu, dans au moins un des dits systèmes générateurs de gaz (1, 2), deux orifices ou plus sont présents, dotés de moyens de fermeture (3) amovibles.

6. Générateur de gaz selon la revendication 5, dans lequel les orifices que présente le récipient sont de diamètres différents ou appartiennent à des groupes de diamètres différents.

7. Générateur de gaz réglable selon l'une quelconque des revendications précédentes, dans lequel l'orifice que présente le récipient s'ouvre en retirant le moyen de fermeture (3).

8. Générateur de gaz réglable selon l'une quelconque des revendications précédentes, dans lequel ledit réglage est commandé en fonction du débit massique souhaité.

9. Générateur de gaz réglable selon l'une quelconque des revendications précédentes, dans lequel les premier et second systèmes générateurs de gaz (1, 2) sont contenus l'un dans l'autre de telle manière que le réglage du débit massique d'un système est influencé par le débit massique de l'autre système.

10. Méthode de réglage de la quantité de gaz produit par un générateur de gaz selon l'une des revendications 1 à 9, dans laquelle le débit massique souhaité est établi à l'aide d'un système de mesure et de calcul en fonction de facteurs extérieurs, et ensuite, en réglant les débits massiques séparés provenant des dits premier et second systèmes générateurs de gaz (1, 2), le débit massique initial souhaité est établi et, si on le souhaite, ajusté pendant la production.

11. Méthode selon la revendication 10, dans laquelle, par la détermination continue des facteurs extérieurs, il est établi si le débit massique généré doit être ajusté et, si besoin, la quantité de gaz est ajustée.

12. Méthode selon la revendication 10 ou la revendication 11, dans laquelle le débit massique généré est augmenté en augmentant la zone d'échappement du premier système générateur de gaz (1).

13. Méthode selon l'une quelconque des revendications 8 à 12, dans laquelle le débit massique généré est réduit ou augmenté en agrandissant la zone d'échappement du second système générateur de gaz (2).

14. Airbag comprenant un système générateur de gaz selon l'une quelconque des revendications 1 à 9 et un sac gonflable (4) relié au générateur de gaz.
